# EUROPÄISCHE PATENTSCHRIFT

(11) **EP 3 358 058 B1**
(45) Veröffentlichungstag und Bekanntmachung des Hinweises auf die Patenterteilung: **16.10.2019**
(21) Anmeldenummer: 17154578.3
(22) Anmeldetag: 03.02.2017
(51) Int. Cl.: D04B 35/28, F16N 39/06

(54) **ÖLUMLAUFAGGREGAT**
OIL CIRCULATION UNIT
ORGANE DE CIRCULATION D'HUILE

(43) Veröffentlichungstag der Anmeldung: 08.08.2018
(73) Patentinhaber: Baier & Köppel GmbH & Co., 91257 Pegnitz (DE)
(72) Erfinder: Köppel, Bernhard, 91257 Pegnitz (DE); Hess, Stefan, 90489 Nürnberg (DE); Wollner, Alois, 91284 Neuhaus/ Pegnitz (DE)
(74) Vertreter: Zech, Stefan Markus

(56) Entgegenhaltungen:
- CN-A- 104 060 398
- CN-A- 106 015 897
- CN-B- 103 133 843
- DE-A1-102014 109 303

## Beschreibung

Die Erfindung betrifft ein Ölumlaufaggregat zur Schmierung einer Industriemaschine, insbesondere einer Strickmaschine, weiter insbesondere einer Sockenstrickmaschine, umfassend einen Öleinlaufabschnitt für rückgeführtes Öl, ein oder mehrere Ölaufbereitungseinrichtungen sowie einen Pumpensumpf zur Weitergabe von aufbereitetem Öl an eine interne oder externe Pumpeneinheit nach den Merkmalen von Patentanspruch 1.

Ölumlaufaggregate zur Schmierung einer Industriemaschine umfassend einen Öleinlaufabschnitt für rückgeführtes Öl, ein oder mehrere Ölaufbereitungseinrichtungen sowie einen Pumpensumpf zur Weitergabe von aufbereitetem Öl an eine interne oder externe Pumpeneinheit sind an sich aus dem Stand der Technik bekannt. Ein entsprechendes Beispiel findet sich in der DE 10 2014 109303 A1.

Oftmals besteht allerdings das Problem, dass das rückgeführte Öl Partikel mitführt, die möglichst herausgefiltert werden müssen, um das Öl für einen erneuten Umlauf entsprechend aufzubereiten. Hierzu werden nach dem Stand der Technik einfache Maschenfilter oder Filtervliese eingesetzt.

Die Aufgabe der vorliegenden Erfindung besteht darin, ein Ölumlaufaggregat mit alternativen oder zusätzlichen Ölaufbereitungseinrichtungen vorzuschlagen.

Diese Aufgabe wird mit einem Ölumlaufaggregat nach den Merkmalen des Anspruchs 1 gelöst. Vorteilhafte Weiterbildungen sind in den Unteransprüchen angegeben.

Eine Kernüberlegung der vorliegenden Erfindung besteht darin, dass die Ölaufbereitungseinrichtungen eine Partikelabscheidungswanne zwischen Öleinlaufabschnitt und Pumpensumpf aufweisen und Magneteinrichtungen vorgesehen sind, die im Betrieb des Ölumlaufaggregats rückgeführte Metallstücke in der Partikelabscheidungswanne festhalten und an einem Weitertransport in Richtung auf den Pumpensumpf hindern. Gerade wenn das Ölumlaufaggregat beispielsweise für eine Strickmaschine, insbesondere eine Sockenstrickmaschine eingesetzt wird, werden im rückgeführten Öl Stücke abgebrochener Nadeln antransportiert, die vor Weitergabe des Öls an eine interne oder externe Pumpeneinheit ausgefiltert werden müssen. Zwar können sich in der Partikelabscheiungswanne derartige Metallstücke bereits schwerkraftbedingt nach unten absetzen; das Vorsehen von erfindungsgemäßen Magneteinrichtungen in, an oder in räumlicher Nähe der Partikelabscheidungswanne ermöglicht aber, diese Metallstücke tatsächlich wirkungsvoll in der Partikelabscheidungswanne festzuhalten und so einen Weitertransport in Richtung auf den Pumpensumpf bzw. die Pumpeneinheit zu verhindern.

Unter Magneteinrichtungen können hier beliebig ausgestalteten Einrichtungen verstanden werden, die eine magnetische Wechselwirkung mit den Metallstücken aufzubauen in der Lage sind, insbesondere Permanentmagneten und/oder Elektromagneten.

Nach der vorliegenden Erfindung, umfassen die Ölaufbereitungseinrichtungen zusätzlich eine Sedimentationseinrichtung in Gestalt eines offenporigen Schaums zwischen Öleinlaufabschnitt und Pumpensumpf, wobei das Öl durch die Sedimentationseinrichtung hindurchfließt und auch kleinere, im rückgeführten Öl enthaltene Partikel wirksam abgeschieden werden. Bevorzugt ist die Sedimentationseinrichtung stromabwärts der Partikelabscheidungswanne anzuordnen, auch eine umgekehrte Reihenfolge ist aber möglich.

Schließlich könnten in der mit Magneteinrichtungen zusammenwirkenden Partikelabscheidungswanne auch die Sedimentationseinrichtungen selbst ausgebildet sein.

Die Sedimentationseinrichtungen sind in Gestalt eines offenporigen Schaums ausgebildet und ermöglichen so, dass das Öl zusammen mit den darin enthaltenen kleineren Partikeln in die Sedimentationseinrichtungen eindringen kann, wobei die erwähnten größeren und kleineren Partikel in der Sedimentationseinrichtung festgehalten werden. Insofern eignet sich die Sedimentationseinrichtung besonders für solche Partikel, die als Schwebeteilchen innerhalb des rückgeführten Öls angesehen werden können und die sich nicht oder nicht ausreichend effektiv unter Einwirkung anderer Wirkmechanismen, wie beispielsweise der Schwerkraft und/oder magnetischer Wirkmechanismen abtrennen lassen.

In einer möglichen Ausführungsform sind die Magneteinrichtungen fest an der Partikelabscheidungswanne befestigt oder integral in die Partikelabscheidungswanne eingearbeitet. In einer alternativen und in mancherlei Hinsicht bevorzugten Ausgestaltung kann vorgesehen sein, dass die Magneteinrichtungen in Bezug auf die Partikelabscheidungswanne in Wirkung bzw. außer Wirkung gebracht werden können, insbesondere dadurch, dass die Partikelabscheidungswanne von den Magneteinrichtungen wegbewegt werden kann und/oder dass die Magneteinrichtungen nach elektromagnetischem Wirkprinzip arbeiten und eine Stromzufuhr zu den Magneteinrichtungen unterbrochen werden kann. Nach einem besonders bevorzugten Aspekt ist es insoweit möglich, die abgeschiedenen Metallpartikel im Betrieb des Ölumlaufaggregats in der Partikelabscheidungswanne durch die Einwirkung der Magneteinrichtungen festzuhalten. Soll die Partikelabscheidungswanne dann entleert werden, kann sie entweder von den Magneteinrichtungen wegbewegt werden und/oder die Magneteinrichtungen können, wenn sie nach elektromagnetischem Wirkprinzip arbeiten, stromlos gesetzt werden. Ein Wegbewegen der Magneteinrichtungen von der Partikelabscheidungswanne ist etwa dann möglich, wenn die Partikelabscheidungswanne selbst aus dem Ölumlaufaggregat entnommen oder bezüglich auf das verbleibende Ölumlaufaggregat wegbewegt, beispielsweise weggeschwenkt werden kann. Selbstverständlich ist es allerdings auch möglich, die Magneteinrichtungen von der Partikelabscheidungswanne wegzubewegen, um die Entleerung zu erleichtern.

In einer konkreten Ausgestaltung können die Magneteinrichtungen unterhalb oder neben der Partikelabscheidungswanne angeordnet sein und die Partikelabscheidungswanne kann, wie bereits erwähnt, lösbar, insbesondere verschwenkbar und/oder herausnehmbar zu einem Gehäuse des Ölumlaufaggregats ausgebildet sein.

Nach einem vorteilhaften Aspekt der Erfindung überdeckt die Sedimentationseinrichtung an ihrem Anbringungsort einen Durchtrittsquerschnitt des Ölflusses innerhalb des Ölumlaufaggregats komplett, derart, dass das rückgeführte Öl jedenfalls durch die Sedimentationseinrichtungen durchgepumpt wird. Durch diese Ausgestaltung ist es möglich, dass kein Öl an der Sedimentationseinrichtung vorbeifließen kann, ohne in diese wenigstens abschnittsweise durchdrungen zu haben. In einer konkreten, bevorzugten Ausgestaltung ist die Sedimentationseinrichtung zwischen einem Bodenabschnitt des Ölumlaufaggregats und einer dem Bodenabschnitt gegenüberliegend angeordneten Schwallwand angeordnet, insbesondere zwischen Bodenabschnitt und Schwallwand eingeklemmt. In dieser konkreten Ausgestaltung definiert der Bodenabschnitt, der insbesondere wannenförmig ausgebildet ist und die bereits erwähnte Schwallwand einen Durchtrittsquerschnitt für den Ölfluss, der durch die Sedimentationseinrichtung in Gestalt eines offenporigen Schaums ausgefüllt ist, Dadurch dass die Sedimentationseinrichtung die so definierte Durchtrittsöffnung für den Ölfluss komplett ausfüllt, muss das Öl zwangsläufig durch die Sedimentationseinrichtung hindurchfließen.

In einer weiteren Ausgestaltung kann vorgesehen sein, dass stromab der Partikelabscheidungswanne und/oder stromauf der Sedimentationseinrichtung ein Feinfilter zur Feinfiltrierung des rückgeführten Öls angeordnet ist. Dieser Feinfilter kann beispielsweise ein Vlies umfassen. In der Anwendung des Ölumlaufaggregats für eine Strickmaschine, insbesondere eine Sockenstrickmaschine dient es auch dazu, textile Fasern aus dem rückgeführten Öl abzutrennen.

Nach einer weiterhin vorteilhaften Ausgestaltung kann stromab der Partikelabscheidungswanne und/oder stromauf der Sedimentationseinrichtung ein Einfüllfilter vorgesehen sein, der zur Filtrierung etwaig nachgefüllten Öls vorgesehen ist, durch den vorzugsweise aber auch das rückgeführte Öl hindurchgeleitet werden kann. Das Einfüllfilter verhindert insofern, dass Schmutzpartikel beim Nachfüllen von Öl in das Ölumlaufaggregat gelangen können. In einer konkreten Ausgestaltung kann vorgesehen sein, dass auch das rückgeführte Öl durch den Einfüllfilter hindurchgeführt wird.

In einer weiteren bevorzugten Ausgestaltung kann das Ölumlaufaggregat noch eine Ölstandsüberwachung aufweisen, um zu überwachen, dass der im Pumpensumpf gegebene Ölstand über einen vorgegebenen Mindestwert liegt.

Meldet die Zustandsüberwachung beispielsweise, dass der im Pumpensumpf gegebene Ölstand unter dem vorgegebenen Mindestwert liegt, so kann eine entsprechend vorgegebene Maßnahme veranlasst werden, beispielsweise ein Störsignal ausgegeben und/oder der Betrieb der Pumpeneinheit unterbrochen und/oder der Betrieb der über das Ölumlaufaggregat mit Öl versorgten Industriemaschine gestoppt werden.

In einer konkret bevorzugten Ausgestaltung ist das Ölumlaufaggregat innerhalb eines im Wesentlichen quaderförmigen Gehäuses untergebracht. Dies ermöglicht eine einerseits kompakte Unterbringung der verschiedenen Komponenten des Ölumlaufaggregats; zum anderen sind die unterschiedlichen Komponenten des Ölumlaufaggregats auch gut vor äußeren Einflüssen, wie beispielsweise Verunreinigungen, geschützt.

Das Gehäuse kann nach einem weiter bevorzugten Aspekt seitlich mindestens einen offenen oder geschlossenen Einbauraum zur Aufnahme der einen oder auch mehreren Pumpeneinheiten definieren. Sofern der mindestens eine seitlich am Gehäuse vorgegebene Einbauraum zumindest teilweise offen ausgebildet ist, sind die Pumpeneinheiten von außen gut zugänglich, was den Anschluss einer oder mehrerer Schmierstoffleitungen sowie die Wartung der Pumpeneinheit wesentlich vereinfacht.

Vorteilhafterweise kann weiterhin vorgesehen sein, dass innerhalb des Gehäuses ein oder mehrere Pumpenaufnahmen vorgesehen sind, um eine oder mehrere Pumpeneinheiten am Pumpensumpf anzuschließen und relativ zum Gehäuse zu fixieren. In einer besonders bevorzugten Ausgestaltung können die Pumpenaufnahmen beispielsweise zumindest grob die Gestalt zylindrischer Ausnehmungen, die von oben her offen sind, aufweisen, in die entsprechend ausgebildete zylindrische Endabschnitte der Pumpeneinheiten eingesteckt werden können.

Ein besonders einfacher und gleichzeitiger zuverlässiger Aufbau des Ölumlaufaggregats ergibt sich, wenn das Gehäuse einerseits den Bodenabschnitt sowie ein Behälteroberteil umfasst, wobei vorzugsweise Bodenabschnitt und Behälteroberteil durch eine Schweißnaht fluiddicht miteinander verbunden sind. Beispielsweise können Bodenabschnitt und Behälteroberteil zweckmäßigerweise entweder jeweils aus Kunststoff oder aus Metall ausgebildet sein.

Nach einem weiteren bevorzugten Aspekt der vorliegenden Erfindung bildet die bereits erwähnte Schwallwand einen einstückigen Bestandteil des Behälteroberteils des Gehäuses. Dadurch wird eine herstellungstechnisch einfache und gleichzeitig stabile Ausbildung ein oder mehrere Pumpenelemente umfassen. der Schwallwand innerhalb des Gehäuses ermöglicht.

In einer konkreten, bevorzugten Ausgestaltung ist im Gehäuse, konkret im Behälteroberteil, eine herausnehmbare Filtereinheit definiert, wobei die Filtereinheit mindestens eine, vorzugsweise mehrere der unterschiedlichen Ölaufbereitungseinrichtungen umfasst.

In einer konkreten Ausgestaltung kann die herausnehmbare Filtereinheit die Partikelabscheidungswanne und/oder den Feinfilter und/oder den Befüllfilter umfassen.

In einer weiterhin vorteilhaften Ausgestaltung des Ölumlaufaggregats sind die Magneteinrichtungen am Behälteroberteil insbesondere an der Schwallwand befestigt.

In einer weiteren Ausführungsform kann vorgesehen sein, dass die Ölaufbereitungseinrichtungen weiterhin eine Wasserabscheideeinrichtung umfassen, wobei die Wasserabscheideeinrichtung als separates Bauteil ausgebildet sein kann oder im Feinfilter integriert oder in der Sedimentationseinrichtung integriert vorgesehen sein kann. Die Wasserabscheideeinrichtung kann auf gängigen Wirkprinzipien zur Abtrennung von Wasser aus Öl beruhen, insbesondere können Filtermaterialien vorgesehen werden, die eine Wasserabsorptionsfunktion aufweisen.

Die Pumpeneinheit, die als interne oder externe Pumpeneinheit des Ölumlaufaggregats vorgesehen sein kann, kann in einer möglichen, gleichzeitig aber bevorzugten Ausgestaltung ein oder mehrere Pumpenelemente umfassen. Die ein oder mehreren Pumpenelemente können bevorzugt als Hubkolbenpumpen ausgebildet sein.

In einer weiterhin bevorzugten Ausgestaltung umfassen die Pumpeneinheit ein oder mehrere Pumpenelemente, wobei nicht benötigte Pumpenelemente verschließbar ausgebildet sein können.

In einer weiteren möglichen Ausgestaltung kann das eine oder können die mehreren Pumpeneinheiten jeweils Sensoreinrichtungen umfassen, um Funktionsdaten der Pumpeneinheit zu erfassen und auszugeben. Derartige Funktionsdaten können beispielsweise umfassen: Erfassung, ob ein Hub des Kolbens erfolgt ist, Erfassung, ob der Hub des Kolbens über eine oder beide Endlagen erfolgt ist, Erfassung, ob Ölfluss erfolgt ist, etc.

In einer möglichen, aber bevorzugten Ausgestaltung sind die Pumpenelemente elektrisch oder pneumatisch angetrieben.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Figur 1: eine perspektivische Ansicht mit einer Ausführungsform des Ölumlaufaggregats;
- Figur 2: eine Ansicht des Ölumlaufaggregats nach Figur 1 aus einer abweichenden Perspektive;
- Figur 3: eine Ansicht des Ölumlaufaggregats aus Figur 1 aus einer wiederum abweichenden Perspektive;
- Figur 4: eine Schnittansicht des Ölumlaufaggregats entlang der Linie A-A in Figur 5;
- Figur 5: das Umlaufaggregat nach den Figuren 1 bis 4 in einer Ansicht von oben;
- Figur 6: die gleiche Ansicht des Ölumlaufaggregats wie in Figur 5, bei der allerdings die Schnittführung C-C veranschaulicht ist;
- Figur 7: das Ölumlaufaggregat nach den Figuren 1 bis 6 entlang der Schnittführung C-C;
- Figur 8: eine Ausführungsform eines Pumpelements zum Einsatz in das Ölumlaufaggregat nach den Figuren 1 bis 7 in perspektivischer Ansicht;
- Figur 9: ein Draufsicht auf das Pumpelement nach Figur 8;
- Figur 10: eine Schnittansicht des Pumpelements nach Figur 9 entlang der Linie A-A;
- Figur 11: eine Schnittansicht des Pumpelements nach Figur 9 entlang der Linie D-D;
- Figur 12: den Ausschnitt "Z" aus der Schnittansicht des Pumpelements nach Figur 10.

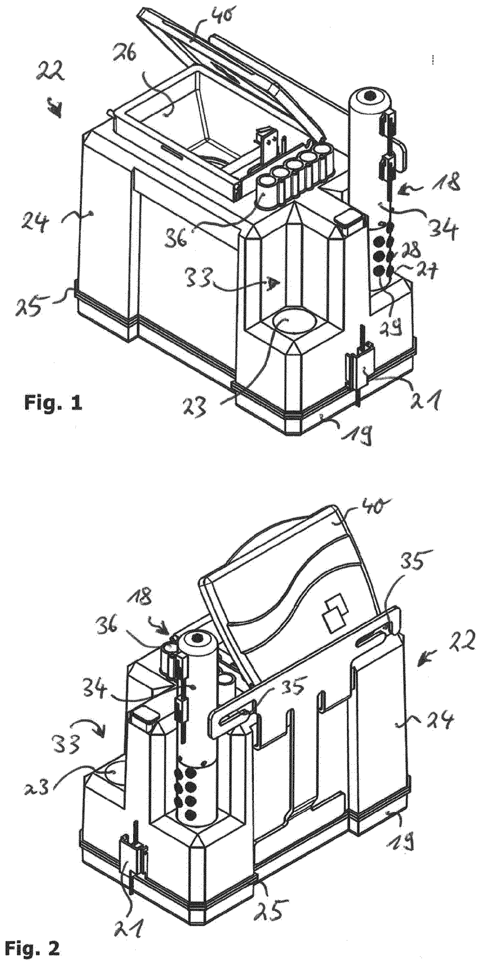

In Figur 1 ist eine perspektivische Ansicht einer Ausführungsform eines Umlaufaggregats veranschaulicht. Das Ölumlaufaggregat gemäß der vorgeschlagenen Ausführungsform weist ein Gehäuse 22 auf, das eine im Wesentlichen quaderförmige Grundform definiert. Natürlich ist es auch möglich, das Ölumlaufaggregat in einem Gehäuse 22 abweichender Gestalt, in mehreren unterschiedlichen Gehäusen oder teilweise auch ohne festes Gehäuse auszubilden. Im vorliegenden Fall besteht das Gehäuse 22 aus einem Behälteroberteil 24 und einem Bodenabschnitt 19, wobei im Behälteroberteil 24 eine herausnehmbare Filtereinheit 26 vorgesehen ist. Behälteroberteil 24 und Bodenabschnitt 19 werden mittels einer Schweißnaht 25 fluiddicht miteinander verbunden. In der konkreten Ausführungsform kann das Gehäuse 22 des Ölumlaufaggregats aus Kunststoff ausgebildet sein. Es ist aber auch möglich, das Gehäuse 22 aus Metall oder aus anderen Materialien auszubilden.

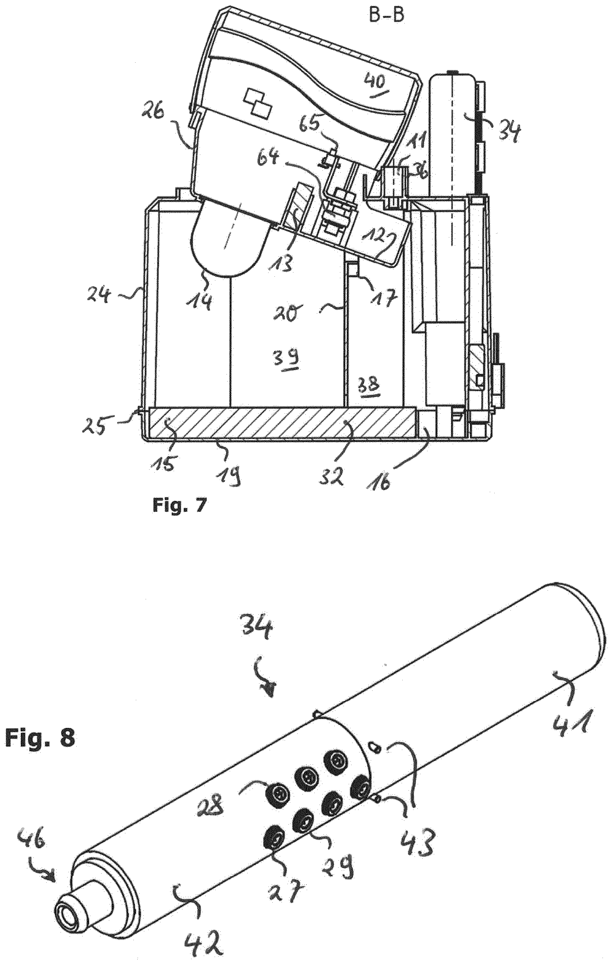

Seitlich am Gehäuse ist mindestens ein Einbauraum 33 - hier sind es konkret zwei Einbauräume - zur Aufnahme einer Pumpeneinheit 18 vorgesehen, wobei die Pumpeneinheit ein oder mehrere Pumpenelemente 34 umfassen kann. Der Einbauraum 33 kann dabei innerhalb des Gehäuses 22 oder außerhalb des Gehäuses 22 oder wie in der vorliegenden Ausführungsform teilweise innerhalb und teilweise außerhalb des Gehäuses 22 vorgesehen sein. Konkret werden die Pumpelemente 34 in der vorliegenden Ausführungsform an einem unteren Ende im Gehäuse 22 aufgenommen, das insoweit ein oder mehrere Pumpenaufnahmen 23, hier konkret zwei Pumpenaufnahmen, vorsieht. Der überwiegende Teil des Einbauraums 33 ist in der vorliegenden Ausführungsform offen ausgestaltet und wird dadurch definiert, dass von einer Ecke des im Wesentlichen quaderförmigen Gehäuses 22 her ein etwa quaderförmiges Volumen ausgeschnitten wird, um den offenen Teil des Einbauraums 33 auszubilden. Die Pumpelemente 34 können eine im Wesentlichen zur zylindrischen Form der Pumpenaufnahmen korrespondierende Grundform aufweisen. Aufbau und Funktion der Pumpenelemente werden weiter unten unter Bezugnahme auf die Figuren 8 bis 12 noch näher erläutert. Das Gehäuse 22 weist noch zwei Montagelaschen 35 auf, um das Ölumlaufaggregat an einem Gestellt, einer Wand, einer Maschine oder an einem anderen zweckmäßigen Montageort befestigen zu können.

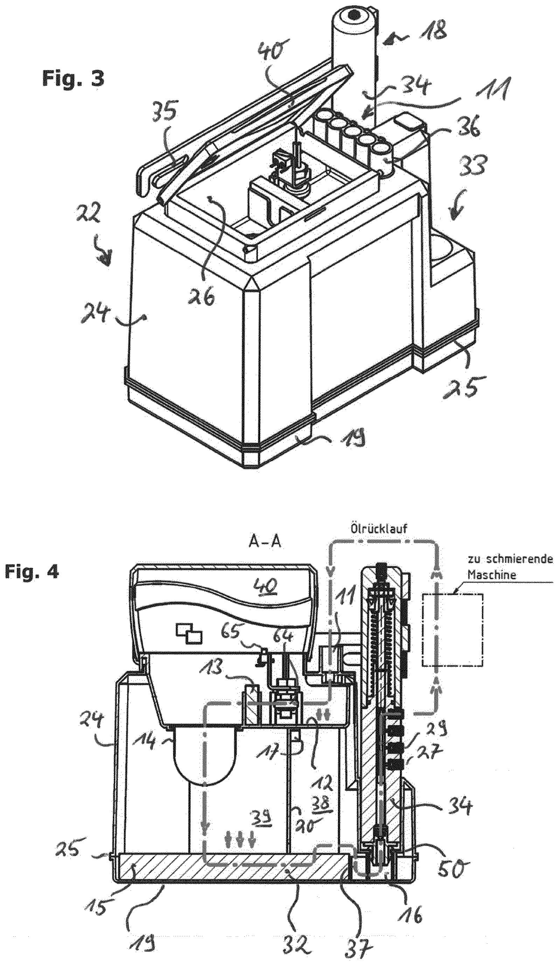

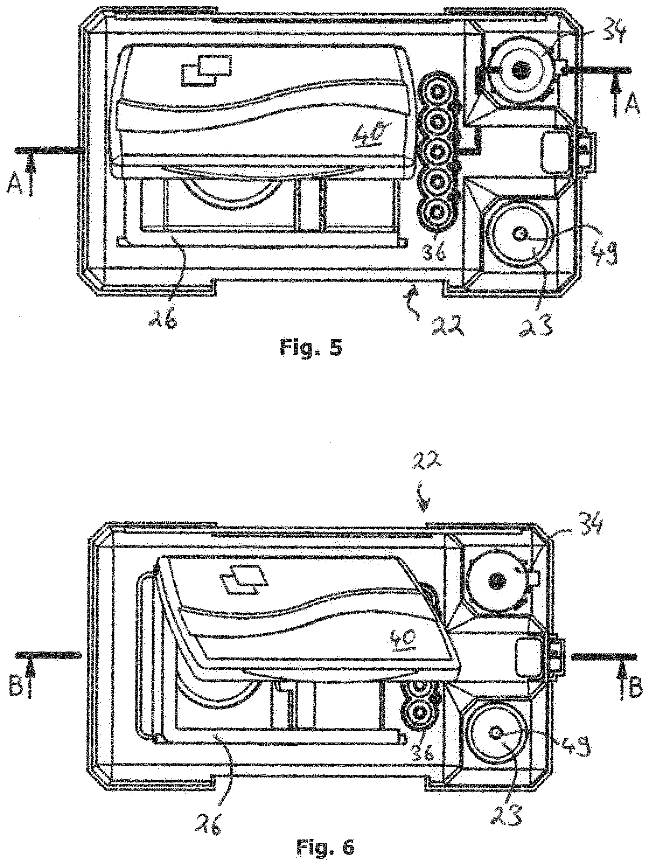

Der Aufbau und die Funktionsweise des Ölumlaufaggregats werden nachfolgend unter Bezugnahme auf die Figuren 4 bis 7 näher erläutert. An der Oberseite des Gehäuses 22 ist zunächst ein Öleinlaufabschnitt 11 für rückgeführtes Öl vorgesehen. Der Öleinlaufabschnitt 11 umfasst bei der vorliegenden Ausführungsform insgesamt fünf Einlaufanschlüsse 36, durch die rückgeführtes Öl in das Ölumlaufaggregat eintreten kann. Dabei tritt das rückgeführte Öl zunächst in eine Partikelabscheidungswanne 12 ein, wird von dort weiter durch ein Feinfilter 13 geführt, und gelangt schließlich über einen Einfüllfilter 14 in eine Sedimentationseinrichtung 15, die innerhalb des Bodenabschnitts 19 des Gehäuses 22 untergebracht ist und wird schließlich zu einem Pumpensumpf 16 geführt, aus dem das ein oder die mehreren Pumpelemente 34 der Pumpeneinheit 18, das dort ausstehende Öl ansaugen kann. Die Pumpeneinheit 18 ist bei der vorliegenden Ausführungsform als interne Pumpeneinheit 18 ausgebildet, da sie in einem Einbauraum 33 des Gehäuses 22 fest am Gehäuse 22 angeschlossen ist. Es wäre gleichfalls aber auch möglich, eine externe Pumpeneinheit 18 vorzusehen, die das rückgeführte Öl über Leitungen aus dem Pumpensumpf 16 ansaugt. Das Ölumlaufaggregat weist insofern eine Reihe von Ölaufbereitungseinrichtungen, konkret nämlich die Partikelabscheidungswanne 12, den Feinfilter 13, den Einfüllfilter 14 sowie die Sedimentationseinrichtung 15 auf, um das rückgeführte Öl für einen erneuten Umlauf aufzubereiten. Die genannten Ölaufbereitungseinrichtungen werden bei der vorliegenden Ausführungsform in der genannten Reihenfolge sequentiell durchströmt. Es sind aber auch andere Strömungsanordnungen denkbar. Insbesondere können Einfüllfilter 14 und Feinfilter 13 auch parallel zueinander angeordnet sein, etwa dergestalt, dass das Feinfilter 13 nur zur Filterung des rückgeführten Öls dient, der Einfüllfilter 14 hingegen nur zur Filterung etwaig nachgefüllten Öls.

Darüber hinaus ist es auch denkbar, die Ölaufbereitungseinrichtungen in anderer Reihenfolge vorzusehen, wobei die konkret vorgeschlagene Reihenfolge als bevorzugt angesehen wird.

Nachstehend werden die verschiedenen Ölaufbereitungseinrichtungen im Einzelnen näher erläutert. Die Partikelabscheidungswanne 12 dient der Abscheidung von Partikeln, insbesondere von Metallpartikeln. Um Metallpartikel noch besser in der Partikelabscheidungswanne festzuhalten, sind zweckmäßigerweise Magneteinrichtungen 17 am, in oder unterhalb bzw. neben der Partikelabscheidungswanne 12 vorgesehen. In der konkreten Ausführungsform sind die Magneteinrichtungen 17 als Permanentmagnet ausgebildet, der in fester Position am Gehäuse, hier konkret am Behälteroberteil 24, seitlich unterhalb der Partikelabscheidungswanne befestigt ist. Gerade wenn das Ölumlaufaggregat für eine Strickmaschine, insbesondere eine Sockenstrickmaschine, eingesetzt wird, können im rückgeführten Öl Nadelbruchstücke enthalten sein, die in der Partikelabscheidungswanne 12 unter Zuhilfenahme der Magnetwirkung der Magneteinrichtungen 17 festgehalten werden.

Der Feinfilter 13 dient der weitere Absonderung von kleineren Partikeln, insbesondere von Fasern, wenn das Ölumlaufaggregat bei einer Strickmaschine, insbesondere einer Sockenstrickmaschine, eingesetzt wird. Der Einfüllfilter 14 ist bei der vorliegenden Ausführungsform als Maschenfilter ausgebildet und dient insofern als Auffangsieb, um das Einbringen von Verunreinigungen beim Nachfüllen von Öl zu vermeiden.

In der bereits angesprochenen Sedimentationseinrichtung 15, die im Bodenabschnitt 19 untergebracht ist, können insbesondere Schwebeteilchen abgefangen werden. In einer konkreten Ausgestaltung ist die Sedimentationseinrichtung als offenporiger Schaum ausgebildet. Das Öl wird zumindest abschnittsweise durch den offenporigen Schaum hindurchgepumpt, so dass Verunreinigungen, insbesondere kleine Partikel sowie Schwebeteilchen in der Sedimentationszone verbleiben.

Die als offenporiger Schaum ausgebildete Sedimentationszone kann in regelmäßigen Abständen ausgewechselt werden. Konkret ist der die Sedimentationseinrichtung 15 ausbildende offenporige Schaum zwischen dem Bodenabschnitt 19 und einer innerhalb des Behälteroberteils 24 des Gehäuses 22 nach unten ragenden Schwallwand 20 eingeklemmt derart, dass der zwischen Bodenabschnitt 19 und Schwallwand definierte Durchtrittsquerschnitt 32 komplett durch den offenporigen Schaum der Sedimentationseinrichtung 15 verschlossen ist. Das rückgeführte Öl muss insofern durch die Sedimentationseinrichtung 15 hindurchdringen und wird somit zwangsweise durch die Sedimentationseinrichtung 15 hindurchgeführt.

Ein Wandabschnitt 37 grenzt den Pumpensumpf 16 zur Sedimentationseinrichtung 15 ab. Das rückgeführte Öl fließt insofern über den Wandabschnitt 37 in dem Pumpensumpf 16. Insofern unterstützt der Wandabschnitt 37, dass die in der Sedimentationseinrichtung 15 aufgenommenen kleinen Partikel und Schwebeteilchen auch in der Sedimentationseinrichtung 15 verbleiben und möglichst nicht in den Pumpensumpf 16 gelangen. Die bereits erwähnte Schwallwand 20 teilt den Innenraum des Gehäuses 22 in einen pumpenseitigen Behälter 38 sowie einen rücklaufseitigen Behälter 39. Verringert die Pumpeneinheit 18 den Füllstand im pumpenseitigen Behälter 38 gegenüber dem rücklaufseitigen Behälter 39, so entsteht ein Druckgefälle hin auf den pumpenseitigen Behälter 38 nach dem Prinzip kommunizierender Röhren, so dass Öl durch die Sedimentationseinrichtung 15 in den pumpenseitigen Behälter 38 nachströmt. Die Schwallwand 28 dient bei der vorliegenden Ausführungsform gleichzeitig noch als Montageort für die Magneteinrichtungen 17, die hier als Permanentmagnet ausgebildet sind.

Vom Öleinlaufabschnitt 11 her betrachtet sind die drei ersten Ölaufbereitungseinrichtungen, nämlich die Partikelabscheidungswanne 12, der Feinfilter 13 sowie der Einfüllfilter 14 bei der vorliegenden Ausführungsform in der - bereits erwähnten - herausnehmbaren Filtereinheit 26 angeordnet. Denkbar ist es natürlich auch, nur einzelne der genannten Ölaufbereitungseinrichtungen, etwa nur die Partikelabscheidungswanne 12 in einer herausnehmbaren Filtereinheit 26 vorzusehen. Dadurch, dass mindestens die Partikelabscheidungswanne 12, bevorzugterweise aber auch der Feinfilter 13 sowie der Einfüllfilter 14 in der herausnehmbaren Filtereinheit 26 untergebracht sind, wird die Reinigung dieser Ölaufbereitungseinrichtungen bzw. der Einsatz eines Ersatzfilters bzw. neuer Filtermaterialien und/oder die Herausnahme abgeschiedener Partikel, insbesondere abgeschiedener Metallpartikel erheblich vereinfacht. Durch das Herausnehmen der herausnehmbaren Filtereinheit 26 wird diese gleichzeitig von den Magneteinrichtungen 17 entfernt, so dass aufgenommene Metallpartikel, wie abgebrochene Nadeln, sich leicht aus der Partikelabscheidungswanne 12 entfernen lassen. Das Ölumlaufaggregat, insbesondere die herausnehmbare Filtereinheit 26 kann noch mit einem öffenbaren Wartungsdeckel 40 verschlossen sein, um im Betrieb die Ölaufbereitungseinrichtungen, konkret die Partikelabscheidungswanne 12, den Feinfilter 13 sowie den Einfüllfilter 14 vor Verunreinigungen zu schützen. Sofern hingegen Öl nachgefüllt werden soll bzw. eine der genannten Ölaufbereitungseinrichtungen zu warten ist, kann dies bei geöffnetem Wartungsdeckel 40 erfolgen.

Am Ölumlaufaggregat können noch verschiedende, insbesondere elektronische Überwachungseinrichtungen vorgesehen sein, nämlich beispielsweise eine Ölstandsüberwachung 21, um den Ölstand im Pumpensumpf (16) dahingehend zu überwachen, dass dieser über einem vorgegebenen Mindestwert liegt. Darüber hinaus kann im Bereich der herausnehmbaren Filtereinheit noch ein Schwimmerschalter 64 vorgesehen sein, um auch dort einen Mindestfüllstand von rücklaufendem Öl, insbesondere in der Partikelabscheidungswanne 12 zu überwachen. Weiterhin kann im Bereich der herausnehmbaren Filtereinheit 26 noch eine Deckelüberwachungseinrichtung 65 vorgesehen sein, um zu überwachen, ob der Wartungsdeckel 40 an der herausnehmbaren Filtereinheit 26 offen bzw. geschlossen ist.

Schließlich können noch am Pumpelement 34 Sensoreinrichtungen vorgesehen sein, um Funktionsdaten des Pumpelementes zu erfassen und auszugeben, beispielsweise um zu überprüfen, ob eine Kolbenbewegung erfolgt ist und/oder ob die jeweilige Endlage erreicht wurde.

In den Figuren 8 bis 12 ist eine Ausführungsform eines Pumpelements 34 dargestellt. Das Pumpelement 34 weist eine im Wesentlichen zylindrische Grundform bestehend aus einem oberen Pumpengehäuse 41 und einem unteren Pumpengehäuse 42 auf. Oberes Pumpengehäuse 41 und unteres Pumpengehäuse 42 sind über Arretierungsstifte 43, die sich in Bohrungen 44 im oberen Pumpengehäuse 41 einschieben und in einer Ringnut 45 im unteren Pumpengehäuse 42 verankern lassen, miteinander verbunden. Am unteren Pumpengehäuse 42 ist ein Einsaugabschnitt 46 des Pumpelements definiert. Mit diesem Einsaugabschnitt 46, der einen Rohrabschnitt 47 mit Hinterschnitt 48 aufweist, lässt sich das Pumpelement 34 in die Pumpenaufnahme 23 des Ölumlaufaggregats verrasten.

Hierfür ist im Bereich des Pumpensumpfs 16 eine Aufnahmebohrung 49, die direkt im Bodenabschnitt 19 selbst ausgebildet oder in Gestalt einer separaten Hülse 50 definiert sein kann, vorgesehen. Der Einsaugabschnitt 46 wird insofern direkt in der Aufnahmebohrung 49 im Bereich des Pumpensumpfs 16 verrastet, so dass das Pumpelement 34 bereits durch diese Verrastung innerhalb der Pumpenaufnahme 23 gehalten ist. Dadurch dass die Pumpenaufnahme 23 auch das Pumpelement teilweise umgebende Wandungen aufweist und die das Pumpelement teilweise umgebenden Wandungen auf den Außendurchmesser des Pumpelements 34 abgestimmt sind, wird das Pumpelement34 zusätzlich gegen Verschiebungen quer zu seiner Längsachse festgehalten.

Das Pumpelement 34 weist in der vorliegenden Ausführungsform insgesamt sieben Pumpenauslässe 27-29 auf. Das Pumpelement 34 ist als pneumatisch angetriebene Hubkolbenpumpe ausgebildet, wobei auch andere Pump- und/oder Antriebsprinzipien ohne weiteres umsetzbar erscheinen, beispielsweise eine elektrisch angetriebene Kolbenpumpe, wobei der elektrische Antrieb beispielsweise als Spindelantrieb ausgebildet sein kann, der direkt auf den Hubkolben einwirkt.

Das Fördervolumen des Pumpelements ist zwischen einer minimalen Dosiermenge und einer maximalen Dosiermenge vorzugsweise kontinuierlich einstellbar. Dabei kann die maximale Dosiermenge um einen Faktor 10, vorzugsweise um einen Faktor 15, besonders bevorzugt um einen Faktor 20, höher sein als die minimale Dosiermenge. Wird als Pumpelement eine Hubkolbenpumpe eingesetzt, könnte die kleinste Dosiermenge pro Hub beispielsweise bei 10 mm³ und die größte Dosiermenge bei 150 mm³ bzw. auch bei 200 mm³ liegen.

Nachstehend wird Aufbau und Funktionsweise der hier konkret vorgesehenen pneumatisch angetriebenen Hubkolbenpumpe näher beschrieben. Ein zentraler Kolben 51 der pneumatisch angetriebenen Hubkolbenpumpe ist durch eine Spiralfeder 52 in einer ersten Ruheposition gehalten. In dieser ersten Ruheposition ist der Kolben 51 bei der vorliegenden Ausführungsform weitestmöglich vom Einsaugabschnitt 46 beabstandet. Der Kolben 51 ist in drei ein- oder mehrstückig zusammenhängende Einzelabschnitte unterteilt, nämlich einem ersten mit einer Innenbohrung 54 ausgestatten proximalen Kolbenbereich 53, einem mittleren Kolbenbereich 55 und einem distalen Kolbenbereich 56. Der distale Kolbenbereich 56 kann ein- oder mehrstückig eine Verdickung 57 aufweisen, in deren Bereich auch eine umlaufende Dichtung 58 vorgesehen ist, die zwischen dem oberen Pumpengehäuse 41 und dem Kolben 51 einen Arbeitsraum 59 definiert. Der Arbeitsraum 59 kann über einen Druckluftanschluss 60 mit Druckluft befüllt werden dergestalt, dass der Kolben 51 in Richtung auf den Einsaugabschnitt 46 hinbewegt wird.

Der proximale Kolbenbereich 53 mit der Innenbohrung 54 steht mit dem Einsaugabschnitt 46 über ein Rückschlagventil 61 in Fluidverbindung. Dieses Rückschlagventil 61 ist fest mit dem proximalen Kolbenbereich verbunden und wird insofern bei einer Bewegung des Kolbens 51 mit hin- und herbewegt.

Ein weiteres stationär angeordnetes Rückschlagventil 62 ist im Bereich des Einsaugabschnitts 46 vorgesehen. Zwischen dem Rückschlagventil 62 im Bereich des Einsaugabschnitts 46 und dem Kolben 51 wird ein Pumpraum 63 definiert. Die Innenbohrung 54 im proximalen Kolbenbereich 53 des Kolbens 51 steht über das Rückschlagventil 61 mit dem Pumpenraum 63 in Fluidverbindung. Über eine Querbohrung 64, die an dem mittleren Kolbenbereich 55 zugewandten Ende des proximalen Kolbenbereichs 53 vorgesehen ist, steht je nach axialer Position des Kolbens 51 ein Pumpeneinlass 27-29 mit der Innenbohrung 54 in Fluidverbindung.

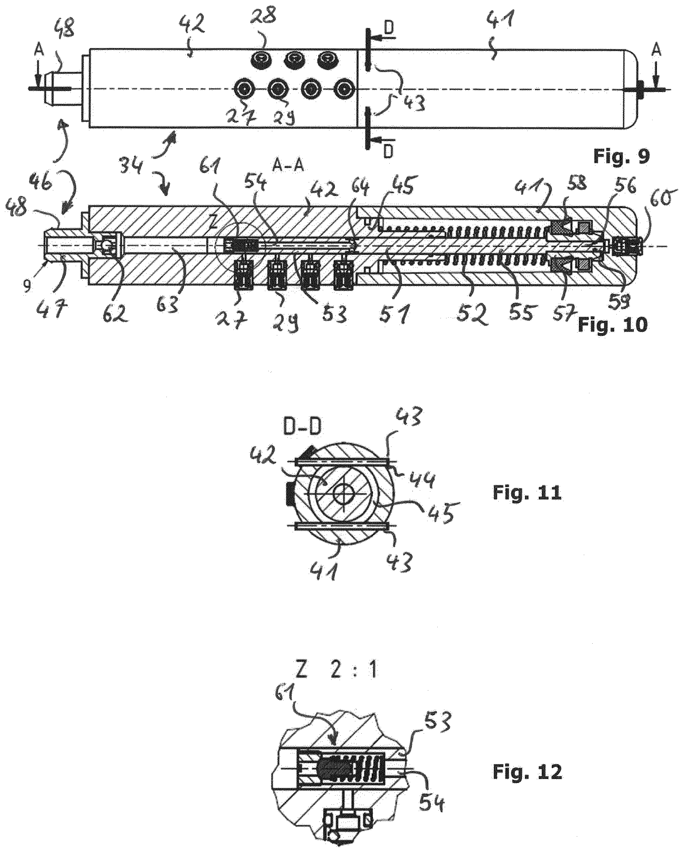

Nachfolgend wird die Funktion des Pumpelements beschrieben. In der in Figur 10 dargestellten Ruhestellung des Kolbens 51 ist der Pumpraum 63 mit Fluid, im vorliegenden Fall mit Öl, befüllt. Wird über den Druckluftanschluss 60 nun Pressluft in den Arbeitsraums 59 eingeleitet, wird der Kolben 51 in Richtung auf den Einsaugabschnitt 46 gedrückt mit der Folge, dass der proximale Kolbenbereich 53 in den Pumpenbereich 63 eintaucht und Fluid, insbesondere Öl, verdrängt, das in Folge des blockierten Rückschlagventils 62 durch die Innenbohrung 54 einfließt und über die Querbohrung 64 dann an die Pumpenauslässe 27-29 sequentiell ausfließen kann, wenn sich die Querbohrung 64 auf Höhe der jeweiligen Pumpenauslässe 27-29 befindet. Dabei werden also nacheinander die unterschiedlichen Pumpenauslässe 27-29 (hier konkret sieben Pumpenauslässe) mit Öl versorgt, die das so ausgegebene Öl an eine Schmierstelle weitergeben können. Nicht benötigte Schmierstoffauslässe werden mit Rückführanschlüssen im Bereich der Öleinlaufanschlüsse 36 kurzgeschlossen. Sobald der Kolben mit seiner Querbohrung 64 den dem Einsaugabschnitt 46 am nächsten gelegenen Pumpenauslass (den untersten Pumpenauslass) erreicht hat, wird die Zuführung von Druckluft in den Arbeitsraum 59 eingestellt und im Gegenteil wird der Druckluft ermöglicht, wieder aus dem Arbeitsraum 59 herauszufließen, wobei der Kolben unter Einwirkung der Spiralfeder 52 in seine Ruheposition zurückgeschoben und dabei der Pumpenraum 63 über den Einsaugabschnitt 46 erneut mit Fluid, insbesondere Öl, befüllt wird.

Das hier dargestellte und beschriebene Pumpelement ist einfach und zuverlässig aufgebaut. Es versteht sich von selbst, dass zahlreiche Abwandlungen möglich erscheinen, um ein zuverlässiges Pumpelement zu definieren. Das Ölumlaufaggregat kann mit einem oder mehrerer derartiger Pumpelemente betrieben werden. Es ist möglich, die Pumpelemente direkt am oder im Ölumlaufaggregat vorzusehen. Alternativ ist es aber auch möglich, die Pumpelemente räumlich getrennt vorzusehen derart, dass das Ölumlaufaggregat lediglich einen Pumpensumpf definiert, der mit den Pumpelementen über insbesondere flexible Leitungen in Fluidverbindung steht.

### Bezugszeichenliste

- 11: Öleinlaufabschnitt
- 12-15: Ölaufbereitungseinrichtungen
- 12: Partikelabscheidungswanne
- 13: Feinfilter
- 14: Einfüllfilter
- 15: Sedimentationseinrichtung
- 16: Pumpensumpf
- 17: Magneteinrichtungen
- 18: interne oder externe Pumpeneinheit
- 19: Bodenabschnitt
- 20: Schwallwand
- 21: Ölstandsüberwachung / Ölstand
- 22: Gehäuse
- 23: Pumpenaufnahmen
- 24: Behälteroberteil
- 25: Schweißnaht
- 26: herausnehmbare Filtereinheit
- 27-29: Pumpenauslässe
- 32: Durchtrittsquerschnitt
- 33: Einbauraum
- 34: Pumpelemente
- 35: Montagelasche
- 36: Öleinlaufanschlüsse
- 37: Wandanschlüsse
- 38: pumpenseitiger Behälter
- 39: rücklaufseitiger Behälter
- 40: Wartungsdeckel
- 41: oberes Pumpengehäuse
- 42: unteres Pumpengehäuse
- 43: Arretierungsstifte
- 44: Bohrungen
- 45: Ringnut
- 46: Eingangsabschnitt
- 47: Rohrabschnitt
- 48: Hinterschnitt
- 49: Aufnahmebohrung
- 50: Hülse
- 51: Kolben
- 52: Spiralfeder
- 53: proximaler Kolbenbereich
- 54: Innenbohrung
- 55: mittlerer Kolbenbereich
- 56: distaler Kolbenbereich
- 57: Verdickung
- 58: Dichtung
- 59: Arbeitsraum
- 60: Druckluftanschluss
- 61: Rückschlagventil
- 62: Rückschlagventil
- 63: Pumpraum
- 64: Schwimmerschalter
- 65: Deckelüberwachungseinrichtung

## Patentansprüche

1. Ölumlaufaggregat zur Schmierung einer Industriemaschine, insbesondere einer Strickmaschine, weiter insbesondere einer Sockenstrickmaschine, umfassend einen Öleinlaufabschnitt (11) für rückgeführtes Öl, ein oder mehrere Ölaufbereitungseinrichtungen (12-15) sowie einen Pumpensumpf (16) zur Weitergabe von aufbereitetem Öl an eine interne oder externe Pumpeneinheit (18),
wobei die Ölaufbereitungseinrichtungen eine Partikelabscheidungswanne (12) zwischen Öleinlaufabschnitt (11) und Pumpensumpf (16) aufweisen und Magneteinrichtungen (17) vorgesehen sind, die im Betrieb des Ölumlaufaggregats rückgeführte Metallstücke in der Partikelabscheidungswanne (12) festhalten und an einem Weitertransport in Richtung auf den Pumpensumpf (16) hindern, **dadurch gekennzeichnet, dass** die Ölaufbereitungseinrichtungen eine Sedimentationseinrichtung (15) in Gestalt eines offenporigem Schaums zwischen Öleinlaufabschnitt (11) und Pumpensumpf (16) aufweist, wobei das Öl durch die Sedimentationseinrichtung (15) hindurchfließt und auch kleinere, im rückgeführten Öl enthaltene Partikel wirksam abgeschieden werden.

2. Ölumlaufaggregat nach Anspruch 1, **dadurch gekennzeichnet, dass** die Magneteinrichtungen (17) fest an der Partikelabscheidungswanne (12) befestigt oder integral in die Partikelabscheidungswanne (12) eingearbeitet sind.

3. Ölumlaufaggregat nach Anspruch 1, **dadurch gekennzeichnet, dass** die Magneteinrichtungen (17) in Bezug auf die Partikelabscheidungswanne (12) in Wirkung bzw. außer Wirkung gebracht werden können, insbesondere dadurch, dass die Partikelabscheidungswanne (12) von den Magneteinrichtungen (17) wegbewegt werden kann und/oder dass die Magneteinrichtungen nach elektromagnetischem Wirkprinzip arbeiten und eine Stromzufuhr zu den Magneteinrichtungen (17) unterbrochen werden kann.

4. Ölumlaufaggregat nach einem der vorhergehenden Ansprüche, **dadurch gekennzeichnet, dass** die Magneteinrichtungen (17) unterhalb oder neben der Partikelabscheidungswanne (12) angeordnet sind und die Partikelabscheidungswanne (12) lösbar, insbesondere verschwenkbar und/oder herausnehmbar relativ zu einem Gehäuse (22) des Ölumlaufaggregats ausgebildet ist.

5. Ölumlaufaggregat nach einem der vorhergehenden Ansprüche, **dadurch gekennzeichnet, dass** die Sedimentationseinrichtung (15) an ihrem Anbringungsort einen Durchtrittsquerschnitt (32) des Ölflusses innerhalb des Ölumlaufaggregats komplett überdeckt derart, dass das rückgeführte Öl jedenfalls durch die Sedimentationseinrichtung (15) hindurchgepumpt wird.

6. Ölumlaufaggregat nach Anspruch 5, **dadurch gekennzeichnet, dass** die Sedimentationseinrichtung (15) zwischen einem Bodenabschnitt (19) des Ölumlaufaggregats und einer dem Bodenabschnitt (19) gegenüberliegend angeordneten Schwallwand (20) angeordnet, insbesondere zwischen Bodenabschnitt (19) und Schwallwand (20) eingeklemmt ist.

7. Ölumlaufaggregat nach einem der vorhergehenden Ansprüche, **dadurch gekennzeichnet, dass** stromab der Partikelabscheidungswanne (12) und/oder stromauf der Sedimentationseinrichtung (15) ein Feinfilter (13) zur Feinfilterung des rückgeführten Öls angeordnet ist.

8. Ölumlaufaggregat nach einem der vorhergehenden Ansprüche, **dadurch gekennzeichnet, dass** stromab der Partikelabscheidungswanne (12) und/oder stromauf der Sedimentationseinrichtung (15) ein Einfüllfilter (14) vorgesehen ist, der zur Filtrierung etwaig nachgefüllten Öls vorgesehen ist, durch den vorzugsweise auch das rückgeführte Öl hindurchgeleitet wird.

9. Ölumlaufaggregat nach einem der vorhergehenden Ansprüche, **dadurch gekennzeichnet, dass** eine Ölstandsüberwachung (21) vorgesehen ist, um zu überwachen, dass der im Pumpensumpf (16) gegebene Ölstand über einem vorgegebenen Mindestwert liegt.

10. Ölumlaufaggregat nach einem der vorhergehenden Ansprüche, **dadurch gekennzeichnet, dass** das Ölumlaufaggregat innerhalb eines im Wesentlichen quaderförmigen Gehäuses (22) untergebracht ist.

11. Ölumlaufaggregat nach Anspruch 10, **dadurch gekennzeichnet, dass** das Gehäuse seitlich mindestens einen Einbauraum (33) zur Aufnahme der einen oder auch mehreren Pumpeneinheiten (18) definiert.

12. Ölumlaufaggregat nach Anspruch 10 oder 11, **dadurch gekennzeichnet, dass** am Gehäuse (22) oder innerhalb des Gehäuses (22) ein oder mehrere Pumpenaufnahmen (23) vorgesehen sind, um eine oder mehrere Pumpeneinheiten (18) am Pumpensumpf (16) anzuschließen und relativ zum Gehäuse (22) zu fixieren.

13. Ölumlaufaggregat nach einem der vorhergehenden Ansprüche, **dadurch gekennzeichnet, dass** das Gehäuse (22) den Bodenabschnitt (19) sowie ein Behälteroberteil (24) umfasst, wobei Bodenabschnitt (19) und Behälteroberteil (24), vorzugsweise durch eine Schweißnaht (25), fluiddicht miteinander verbunden sind.

14. Ölumlaufaggregat nach einem der Ansprüche 6 bis 13, **dadurch gekennzeichnet, dass** die Schwallwand (20) einen einstückigen Bestandteil des Behälteroberteils (24) bildet.

15. Ölumlaufaggregat nach einem der vorhergehenden Ansprüche, **dadurch gekennzeichnet, dass** im Behälteroberteil (24) eine herausnehmbare Filtereinheit (26) einsetzbar ist, die mindestens eine, vorzugsweise mehrere, der Ölaufbereitungseinrichtungen (12-14) umfasst.

16. Ölumlaufaggregat nach Anspruch 15, **dadurch gekennzeichnet, dass** die herausnehmbare Filtereinheit (26) die Partikelabscheidungswanne (12) und/oder den Feinfilter (13) und/oder den Befüllfilter (14) umfasst.

17. Ölumlaufaggregat nach einem der Ansprüche 1 oder 5 bis 16, **dadurch gekennzeichnet, dass** die Magneteinrichtungen (17) am Behälteroberteil (24), insbesondere an der Schwallwand (20) befestigt sind.

18. Ölumlaufaggregat nach einem der Ansprüche 7 bis 17, **dadurch gekennzeichnet, dass** die Ölaufbereitungseinrichtungen weiterhin eine Wasserabscheideeinrichtung umfassen, wobei die Wasserabscheideeinrichtung als separates Bauteil ausgebildet sein kann oder im Feinfilter (13) integriert oder in der Sedimentationseinrichtung (15) integriert vorgesehen sein kann.

19. Ölumlaufaggregat nach einem der vorhergehenden Ansprüche, **dadurch gekennzeichnet, dass** die Pumpeneinheit (18) ein oder mehrere Pumpenelemente (34) umfasst, die vorzugsweise als Hubkolbenpumpe ausgebildet sind.

20. Ölumlaufaggregat nach Anspruch 19, **dadurch gekennzeichnet, dass** das Fördervolumen der Pumpeneinheit zwischen einer minimalen Dosiermenge und einer maximalen Dosiermenge einstellbar ist, wobei die maximale Dosiermenge vorzugsweise 10-mal, weiter vorzugsweise 15-mal, besonders vorzugsweise 20-mal größer ist als die minimale Dosiermenge.

21. Ölumlaufaggregat nach einem der vorhergehenden Ansprüche, **dadurch gekennzeichnet, dass** die Pumpenelemente (34) ein oder mehrere Pumpenauslässe (27-29) umfasst, wobei nicht benötigte Pumpenauslässe verschließbar ausgebildet sind.

22. Ölumlaufaggregat nach einem der vorhergehenden Ansprüche, **dadurch gekennzeichnet, dass** die eine oder mehrere Pumpenelemente (34) jeweils Sensoreinrichtungen umfassen, um Funktionsdaten der Pumpenelemente (34) zu erfassen und auszugeben.

23. Ölumlaufaggregat nach einem der Ansprüche 19 bis 22, **dadurch gekennzeichnet, dass** die Pumpenelemente (34) elektrisch oder pneumatisch angetrieben sind.

## Claims

1. An oil circulation unit for lubricating an industrial machine, in particular a knitting machine, further in particular a sock knitting machine, comprising an oil inlet section (11) for returned oil, one or more oil processing devices (12 to 15), as well as a pump sump (16) for passing on processed oil to an internal or external pump unit (18),
wherein the oil processing devices include a particle separation vat (12) between the oil inlet section (11) and the pump sump (16), and magnetic devices (17) are provided which retain metal pieces, returned during operation of the oil circulation unit, in the particle separation vat (12) and preventing them from being further conveyed toward the pump sump (16), **characterized in that** the oil processing devices include a sedimentation device (15) in the form of an open-pore foam between the oil inlet section (11) and the pump sump (16), wherein the oil flows through the sedimentation device (15) and also smaller particles contained in the returned oil are effectively separated.

2. The oil circulation unit according to claim 1, **characterized in that** the magnetic devices (17) are rigidly attached to the particle separation vat (12) or are integrally incorporated into the particle separation vat (12).

3. The oil circulation unit according to claim 1, **characterized in that** the magnetic devices (17) may be brought into action or out of action with respect to the particle separation vat (12) in particular by the particle separation vat (12) being movable away from the magnetic devices (17) and/or that the magnetic devices operate according to an electromagnetic mode of action and a power supply to the magnetic devices (17) can be interrupted.

4. The oil circulation unit according to any one of the preceding claims, **characterized in that** the magnetic devices (17) are arranged below or next to the particle separation vat (12), and the particle separation vat (12) is formed to be detachable, in particular pivotable and/or removable relative to a housing (22) of the oil circulation unit.

5. The oil circulation unit according to any one of the preceding claims, **characterized in that** the sedimentation device (15), at its place of attachment, completely covers a passage cross-section (32) of the oil flow within the oil circulation unit such that the returned oil is in any case pumped through the sedimentation device (15).

6. The oil circulation unit according to claim 5, **characterized in that** the sedimentation device (15) is arranged between a bottom section (19) of the oil circulation unit and a baffle wall (20) arranged opposite the bottom section (19), in particular is clamped between the bottom section (19) and the baffle wall (20).

7. The oil circulation unit according to any one of the preceding claims, **characterized in that** downstream of the particle separation vat (12) and/or upstream of the sedimentation device (15), a fine filter (13) for finely filtering the returned oil is arranged.

8. The oil circulation unit according to any one of the preceding claims, **characterized in that** downstream of the particle separation vat (12) and/or upstream of the sedimentation device (15), a filling filter (14) is provided intended for filtering possibly refilled oil, through which the returned oil is also preferably passed.

9. The oil circulation unit according to any one of the preceding claims, **characterized in that** an oil level monitoring unit (21) is provided for monitoring that the oil level present in the pump sump (16) is above a predefined minimum value.

10. The oil circulation unit according to any one of the preceding claims, **characterized in that** the oil circulation unit is housed within a substantially cuboid housing (22).

11. The oil circulation unit according to claim 10, **characterized in that** the housing laterally defines at least one installation space (33) for receiving the one or also more pump units (18).

12. The oil circulation unit according to claim 10 or 11, **characterized in that** one or more pump receptacles (23) are provided on the housing (22) or within the housing (22) for connecting one or more pump units (18) to the pump sump (16) and fixing them relative to the housing (22).

13. The oil circulation unit according to any one of the preceding claims, **characterized in that** the housing (22) comprises the bottom section (19) as well as an upper vessel part (24), wherein the bottom section (19) and the upper vessel part (24) are interconnected in a fluid-tight manner in particular by a weld seam (25).

14. The oil circulation unit according to any one of claims 6 to 13, **characterized in that** the baffle wall (20) forms an integral component of the upper vessel part (24).

15. The oil circulation unit according to any one of the preceding claims, **characterized in that**, into the upper vessel part (24), a removable filter unit (26) comprising at least one, preferably more of the oil processing devices (12 to 14), is insertable.

16. The oil circulation unit according to claim 15, **characterized in that** the removable filter unit (26) comprises the particle separation vat (12) and/or the fine filter (13) and/or the filling filter (14).

17. The oil circulation unit according to any one of claims 1 or 5 to 16, **characterized in that** the magnetic devices (17) are attached to the upper vessel part (24), in particular to the baffle wall (20).

18. The oil circulation unit according to any one of claims 7 to 17, **characterized in that** the oil processing devices furthermore comprise a water separating device, wherein the water separating device may be formed as a separate constructional part or may be provided to be integrated in the fine filter (13) or in the sedimentation device (15).

19. The oil circulation unit according to any one of the preceding claims, **characterized in that** the pump unit (18) comprises one or more pump elements (34) preferably formed as reciprocating piston pump.

20. The oil circulation unit according to claim 19, **characterized in that** the delivery volume of the pump unit is settable between a minimum dosing amount and a maximum dosing amount, wherein the maximum dosing amount preferably is 10 times, further preferably 15 times, particularly preferred 20 times larger than the minimum dosing amount.

21. The oil circulation unit according to any one of the preceding claims, **characterized in that** the pump elements (3) comprise one or more pump outlets (27 to 29), wherein pump outlets that are not required are formed to be closable.

22. The oil circulation unit according to any one of the preceding claims, **characterized in that** the one or more pump elements (34) each comprise sensor devices for detecting and outputting functional data of the pumping elements (34).

23. The oil circulation unit according to any one of claims 19 to 22, **characterized in that** the pump elements (34) are electrically or pneumatically driven.

## Revendications

1. Groupe de circulation d'huile pour la lubrification d'une machine industrielle, en particulier d'une machine de tricotage, de manière plus particulière d'une machine de tricotage de chaussettes, comprenant une section d'admission d'huile (11) pour de l'huile retournée, un ou plusieurs dispositifs de traitement d'huile (12 à 15) ainsi qu'un puisard (16) pour la transmission d'huile traitée à une unité de pompage (18) interne ou externe,
sachant que les dispositifs de traitement d'huile présentent une cuvette de séparation de particules (12) entre section d'admission d'huile (11) et puisard (16), et des dispositifs à aimant (17) qui retiennent dans la cuvette de séparation de particules (12) des morceaux de métal retournés pendant le fonctionnement du groupe de circulation d'huile et les empêchent de continuer en direction du puisard (16) sont prévus, **caractérisé en ce que**
les dispositifs de traitement d'huile présentent un dispositif de sédimentation (15) sous la forme d'une mousse à pores ouverts entre section d'admission d'huile (11) et puisard (16), sachant que l'huile traverse le dispositif de sédimentation (15) et des particules plus petites contenues dans l'huile retournée sont également séparées efficacement.

2. Groupe de circulation d'huile selon la revendication 1, **caractérisé en ce que** les dispositifs à aimant (17) sont fermement fixés à la cuvette de séparation de particules (12) ou sont incorporés comme parties intégrantes dans la cuvette de séparation de particules (12).

3. Groupe de circulation d'huile selon la revendication 1, **caractérisé en ce que** les dispositifs à aimant (17) peuvent être mis en action ou hors action par rapport à la cuvette de séparation de particules (12), en particulier **en ce que** la cuvette de séparation de particules (12) peut être éloignée des dispositifs à aimant (17) et/ou **en ce que** les dispositifs à aimant fonctionnent selon le principe d'action électromagnétique et une alimentation en courant aux dispositifs à aimant (17) peut être interrompue.

4. Groupe de circulation d'huile selon l'une des revendications précédentes, **caractérisé en ce que** les dispositifs à aimant (17) sont disposés sous ou à côté de la cuvette de séparation de particules (12) et la cuvette de séparation de particules (12) est constituée de manière détachable, en particulier pivotable et/ou escamotable par rapport à un carter (22) du groupe de circulation d'huile.

5. Groupe de circulation d'huile selon l'une des revendications précédentes, **caractérisé en ce que** le dispositif de sédimentation (15) recouvre entièrement, à son lieu de mise en place, une section transversale de passage (32) du flux d'huile à l'intérieur du groupe de circulation d'huile de telle manière que l'huile retournée soit en tout cas pompée à travers le dispositif de sédimentation (15).

6. Groupe de circulation d'huile selon la revendication 5, **caractérisé en ce que** le dispositif de sédimentation (15) est disposé entre une section de fond (19) du groupe de circulation d'huile et une chicane (20) disposée à l'opposé de la section de fond (19), en particulier est calée entre section de fond (19) et chicane (20).

7. Groupe de circulation d'huile selon l'une des revendications précédentes, **caractérisé en ce que**, en aval de la cuvette de séparation de particules (12) et/ou en amont du dispositif de sédimentation (15), un filtre fin (13) est disposé pour le filtrage fin de l'huile retournée.

8. Groupe de circulation d'huile selon l'une des revendications précédentes, **caractérisé en ce que**, en aval de la cuvette de séparation de particules (12) et/ou en amont du dispositif de sédimentation (15), un filtre de remplissage (14) qui est prévu pour le filtrage d'huile éventuellement rajoutée et à travers lequel de préférence l'huile retournée est également conduite est prévu.

9. Groupe de circulation d'huile selon l'une des revendications précédentes, **caractérisé en ce qu'**une surveillance de niveau d'huile (21) est prévue pour surveiller que le niveau d'huile donné dans le puisard (16) se situe au-dessus d'une valeur minimale spécifiée.

10. Groupe de circulation d'huile selon l'une des revendications précédentes, **caractérisé en ce que** le groupe de circulation d'huile est logé à l'intérieur d'un carter (22) de forme sensiblement parallélépipédique.

11. Groupe de circulation d'huile selon la revendication 10, **caractérisé en ce que** le carter définit latéralement au moins un espace d'encastrement (33) pour le logement de l'une voire de plusieurs unités de pompage (18).

12. Groupe de circulation d'huile selon la revendication 10 ou 11, **caractérisé en ce qu'**un ou plusieurs logements de pompe (23) sont prévus au niveau du carter (22) ou à l'intérieur du carter (22) pour raccorder une ou plusieurs unités de pompage (18) au puisard (16) et la ou les fixer par rapport au carter (22).

13. Groupe de circulation d'huile selon l'une des revendications précédentes, **caractérisé en ce que** le carter (22) comprend la section de fond (19) ainsi qu'une partie supérieure de contenant (24), sachant que section de fond (19) et partie supérieure de contenant (24) sont reliées de manière fluidiquement étanche l'une à l'autre, de préférence par une soudure (25).

14. Groupe de circulation d'huile selon l'une des revendications 6 à 13, **caractérisé en ce que** la chicane (20) fait partie intégrante de la partie supérieure de contenant (24).

15. Groupe de circulation d'huile selon l'une des revendications précédentes, **caractérisé en ce qu'**une unité de filtrage (26) escamotable qui comprend au moins un, de préférence plusieurs dispositifs de traitement d'huile (12 à 14), est insérable dans la partie supérieure de contenant (24).

16. Groupe de circulation d'huile selon la revendication 15, **caractérisé en ce que** l'unité de filtre (26) escamotable comprend la cuvette de séparation de particules (12) et/ou le filtre fin (13) et/ou le filtre de remplissage (14).

17. Groupe de circulation d'huile selon l'une des revendications 1 ou 5 à 16, **caractérisé en ce que** les dispositifs à aimant (17) sont fixés à la partie supérieure de contenant (24), en particulier à la chicane (20).

18. Groupe de circulation d'huile selon l'une des revendications 7 à 17, **caractérisé en ce que** les dispositifs de traitement d'huile comprennent en outre un dispositif de séparation d'eau, sachant que le dispositif de séparation d'eau peut être constitué comme composant séparé ou peut être prévu de manière intégrée dans le filtre fin (13) ou intégrée dans le dispositif de sédimentation (15).

19. Groupe de circulation d'huile selon l'une des revendications précédentes, **caractérisé en ce que** l'unité de pompage (18) comprend un ou plusieurs éléments de pompage (34) qui sont de préférence constitués comme pompe à piston alternatif.

20. Groupe de circulation d'huile selon la revendication 19, **caractérisé en ce que** le volume de refoulement de l'unité de pompage est réglable entre une quantité de dosage minimale et une quantité de dosage maximale, sachant que la quantité de dosage maximale est de préférence 10 fois, de manière plus préférentielle 15 fois, de manière particulièrement préférentielle 20 fois plus grande que la quantité de dosage minimale.

21. Groupe de circulation d'huile selon l'une des revendications précédentes, **caractérisé en ce que** les éléments de pompage (34) comprennent une ou plusieurs sorties de pompe (27 à 29), sachant que les sorties de pompe non requises sont constituées de manière obturable.

22. Groupe de circulation d'huile selon l'une des revendications précédentes, **caractérisé en ce que** l'un ou les plusieurs éléments de pompage (34) comprennent respectivement des dispositifs de capteur pour saisir et émettre des données fonctionnelles des éléments de pompage (34).

23. Groupe de circulation d'huile selon l'une des revendications 19 à 22, **caractérisé en ce que** les éléments de pompage (34) sont entraînés électriquement ou pneumatiquement.
